# EUROPÄISCHE PATENTSCHRIFT

(11) **EP 1 270 698 B1**
(45) Veröffentlichungstag und Bekanntmachung des Hinweises auf die Patenterteilung: **05.04.2006**
(21) Anmeldenummer: 02012012.7
(22) Anmeldetag: 31.05.2002
(51) Int. Cl.: C09J 7/04

(54) **Verwendung eines beidseitig klebend ausgerüsteten Klebebands zur Fixierung von Druckplatten**
Use of a double-sided adhesive tape for fixing printing plates
Utilisation d' un ruban adhésif double-face permettant de fixer des plaques d'impression

(30) Priorität: 20.06.2001 DE 10129730
(43) Veröffentlichungstag der Anmeldung: 02.01.2003
(73) Patentinhaber: tesa AG, 20253 Hamburg (DE)
(72) Erfinder: Runge, Torsten, Dr., 21149 Hamburg (DE); Fick, Andrea, 20257 Hamburg (DE); Mayer, Bianca, 22453 Hamburg (DE); Fiencke, Jochen, 22453 Hamburg (DE)

(56) Entgegenhaltungen:
- EP-A- 0 760 389
- EP-A- 0 943 416
- WO-A-01/98425
- WO-A-02/07960
- US-A- 4 414 275
- PATENT ABSTRACTS OF JAPAN vol. 2000, no. 04, 31. August 2000 (2000-08-31) & JP 2000 008006 A (SONY CHEM CORP), 11. Januar 2000 (2000-01-11)

## Beschreibung

Die Erfindung beschreibt die Verwendung eines beidseitig klebend ausgerüsteten Klebebands zur Fixierung von Druckplatten, insbesondere von mehrschichtigen Photopolymer-Druckplatten auf Druckzylindern oder Sleeves in der Druckindustrie.

In der Druckindustrie sind unterschiedliche Verfahren bekannt, um Motive mittels druckender Vorlagen auf beispielsweise Papier zu übertragen. Eine Möglichkeit besteht im sogenannten Flexodruck. Eine Ausführungsform des Flexodrucks stellt nun wiederum die Verwendung mehrschichtiger Photopolymer-Druckplatten mit flexiblem Unterbau dar, wobei diese Art des Druckens schon seit längerer Zeit zum Stand der Technik zählt. Die Druckplatten bestehen dabei aus mehreren Schichten unterschiedlichen polymeren Materials mit jeweils speziellen Aufgaben. Zum Beispiel weisen die Druckplatten "nyloflex MA" und "nyloflex ME" der Firma BASF AG drei Schichten auf, nämlich eine lichtempfindliche Reliefschicht, darunter eine Stabilisierungsfolie sowie als Basis eine elastische Trägerschicht.

Die Druckplatten müssen für den Druckvorgang auf Druckzylindern fixiert werden. Dies erfolgt zumeist durch Verkleben, insbesondere unter Verwendung eines Selbstklebebandes. Dabei muß das Klebeband die folgenden Eigenschaften aufweisen:
- Sowohl das Klebeband als auch die Druckplatte müssen vor dem Druckvorgang ohne Beschädigung repositionierbar sein, um eventuelle Ungenauigkeiten in der Ausrichtung des Klebebandes bzw. der Druckplatte problemlos beheben zu können.
- Während des Druckvorganges muß eine sehr starke Haftung der Druckplatten auf dem Druckzylinder gewährleistet sein. Auch kleinste Verschiebungen der Platte führen zu völlig unzureichenden Druckergebnissen durch Passerprobleme.
- Nach dem Druckvorgang muß es auf der anderen Seite aber wieder möglich sein, die Platte und das Klebeband leicht und vor allem rückstandsfrei vom Druckzylinder zu lösen, ohne dabei die Druckplatte zu beschädigen.

Die bekannten Klebebänder erfüllen die obigen Anforderungen nur mangelhaft. Auf der einen Seite sind einige Klebebänder zwar in der Lage, aufgrund einer nur schwachen Verklebung ein Repositionieren der Druckplatten zu erlauben, zeigen aber ungenügende Haftfähigkeit nach längerem Druckeinsatz, so daß die Platten während des Druckens zu wandern beginnen oder sich die Plattenkanten abheben. Auf der anderen Seite existieren Klebebänder, die durch hohe Haftkräfte ein sicheres Verankern der Platten auf dem Zylinder gewährleisten, deren Klebeschicht aber nach dem Druck zur Platte umspult und von dort nur mit Hilfe von Lösungsmitteln von der Plattenrückseite zu entfernen ist.

In DE 195 25 403 A1 wird die Verwendung eines beidseitig ausgerüsteten Klebebandes zur Fixierung von mehrschichtigen, weichmacherhaftigen Photopolymer-Druckplatten mit flexiblem Unterbau auf Druckzylindern vorgeschlagen.
Das Klebeband weist als Träger eine polymere Folie aus Polypropylen auf. Alternativ zu Polypropylen ist auch die Verwendung von beispielsweise PVC als Trägermaterial möglich.
Zur Beschichtung der beiden Außenflächen des Trägers werden zwei unterschiedliche Klebmassen verwendet. Auf die Seite des Klebebandes, die an der Trägerschicht der Druckplatte angesetzt wird, wird eine extrem schwach klebende Naturkautschuk-Klebmasse beschichtet. Die Klebmasse weist eine Klebkraft von 0,2 bis 2 N/cm, bevorzugt 1 N/cm, auf.
Die andere Klebebeschichtung wird von einer stark klebenden Schicht gebildet, die vorzugsweise ebenfalls auf Naturkautschuk basiert. Alternativ kann aber auch eine Klebemasse, die auf herkömmlichen Acrylaten aufbaut, eingesetzt werden. Diese Beschichtung ist durch eine Klebkraft von 2 bis 6 N/cm, bevorzugt 4,5 N/cm, gekennzeichnet.
Die angegebenen Klebkräfte sind nach AFERA 4001 gemessen.

In der Druckindustrie, vor allem im Flexodruck, werden insbesondere auch kompressible doppelseitige Klebebänder zum Verkleben von Druckplatten (Klischees) auf Druckzylindern oder Sleeves eingesetzt, die sogenannten Schaumstoff-Klischeeklebebänder.

Krischeeklebebänder mit Schaumträger benötigen eine Stabilisierungsfolie, zum Beispiel aus PET, die eine Dehnung und damit Dickenänderung des Klebebandes bei Montage und Repositionieren des Klebebandes und des Klischees verhindert.
Weiterhin dient die Stabilisierungsfolie zur Kraftverteilung während des Druckprozesses.

Da die zum Klebeband gerichtete Rückseite der Klischees ebenfalls aus einer PET-Folie besteht, muß die Verankerung der Haftklebemasse auf der Stabilisierungsfolie des Klischeeklebebandes durch eine Vorbehandlung unterstützt werden. Nur so kann bei der Demontage des Klischees ein Umspulen der Haftklebemasse von dem Klischeeklebeband zum Klischee verhindert werden.
Bekannt als Methoden zur Vorbehandlung sind die Coronavorbehandlung und/oder ein Vorstrich auf der Folie.

Die WO 02/07960 A1 beschreibt die Verwendung eines beidseitig klebend ausgerüsteten Klebebands zur Fixierung von Druckplatten, wobei der Träger des Klebebandes eine Folie aus Polyethylenterephthalat (PET) sein kann und auf der Folie beidseitig selbstklebende Beschichtungen aufgebracht sein können.
Die Oberfläche der Folie aus Polyethylenterephthalat (PET) ist ein- oder beidseitig zumindest partiell unter Verwendung einer Reagenz, die einen Ätzprozess bewirkt, aufgeraut ist. Eine zusätzliche physikalische Vorbehandlung nach dem Corona-, Plasma- oder Flammverfahren ist nicht erwähnt.

Der Erfindung liegt nun die Aufgabe zugrunde, ein Klebeband zu schaffen, das bei seiner Verwendung beispielsweise in der Druckindustrie ein Umspulen der Haftklebemasse von dem Klischeeklebeband zum Klischee unterdrückt und überhaupt die Nachteile des Stands der Technik nicht oder zumindest nicht in dem Umfang aufweist.

Gelöst wird diese Aufgabe durch die Verwendung eines beidseitig klebend ausgerüsteten klebebands, wie es in den Patentansprüchen näher gekennzeichnet ist. Die Unteransprüche betreffen vorteilhafte Ausführungsformen der Erfindung.

Demgemäß betrifft die Erfindung die Verwendung eines beidseitig klebend ausgerüsteten Klebebands zur Fixierung von Druckplatten, insbesondere von mehrschichtigen Photopolymer-Druckplatten auf Druckzylindern oder Sleeves, wobei der Träger des Klebebandes eine Folie aus Polyethylenterephthalat (PET) ist und auf der Folie beidseitig selbstklebende Beschichtungen aufgebracht sind.
Die Oberfläche der Folie aus Polyethylenterephthalat (PET) ist ein- oder beidseitig zumindest partiell unter Verwendung einer Reagenz, die im Speziellen einen Ätzprozeß bewirkt, aufgerauht, und/oder die Oberflächenenergie der Oberfläche der Folie ist erhöht, so daß die Masseverankerung auf der Folie optimiert wird.

Unter der Oberflächenenergie oder der Oberflächenspannung versteht man die Grenzflächenspannung von Festkörpern und Flüssigkeiten gegenüber der Dampfphase beziehungsweise Luft. Die Abbildung veranschaulicht die Bedeutung der Oberflächenenergie für Flüssigkeiten.

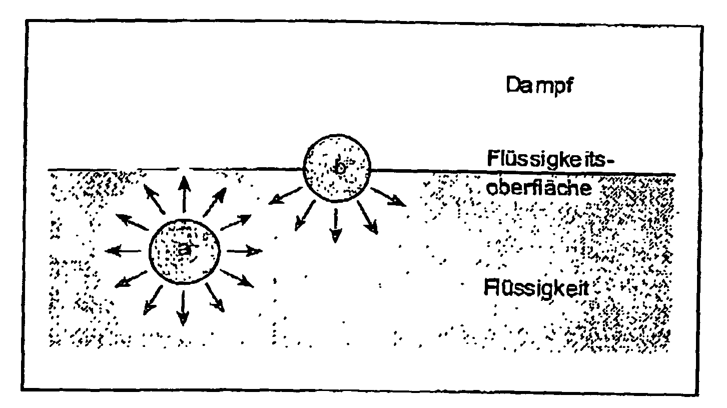

Während in der Flüssigkeit (a) auf die Moleküle gleiche Anziehungskräfte (zwischenmolekulare Kräfte) aus allen Richtungen wirken, sind diese Kräfte an der Grenzfläche Flüssigkeit/Dampf (b) nicht ausgeglichen. Es besteht eine in das Flüssigkeitsinnere gerichtete Kraft, die Moleküle aus der Oberfläche in die Flüssigkeit zu treiben versucht. Die Flüssigkeit ist daher bestrebt, ihre Oberfläche zu verkleinem, weshalb Tröpfchen und Gasblasen Kugelgestalt anzunehmen versuchen.

Die Oberflächenenergie ist definiert als Kraft in der Oberfläche pro Längeneinheit und hat die Dimension mN/m (10⁻³ Newton/Meter).

Mit Oberflächenarbeit bezeichnet man die Arbeit, die nötig ist, um unter reversiblen Bedingungen und bei isothermem Verlauf die Oberfläche zu bilden oder zu vergrößern. Unter bestimmten Voraussetzungen entspricht die Oberflächenenergie der Freien oder Helmholtz-Energie der Oberfläche pro Flächeneinheit.

Unmittelbar nach der Ausbildung der Oberfläche erhält man Werte für die Oberflächenenergie, die vom Gleichgewichtszustand abweichen. Man bezeichnet diesen Effekt als dynamische, den Gleichgewichtswert als statische Oberflächenspannung.

Die Oberflächenenergie kann u. a. mit folgenden Methoden bestimmt werden:
(a) Meniskus-Bildung und Steighöhe in Kapillaren
(b) Blasendruck einer in die Flüssigkeit austretenden Gasblase
(c) Ring-Methode
(d) Wilhelmy-Methode
(e) Gestalt liegender oder hängender Tropfen

Für die Prüfung von Tensiden ist Methode (c) nach DIN 53914: 1980-03 genormt.

Polyethylenterephthalate sind Polyester aus der Gruppe der Polyalkylenterephthalate und weisen die Struktur 1 auf.

Ihre technische Herstellung erfolgt
1. durch Umesterung von Dimethylterephthalat mit Ethylenglykol unter Methanol-Abspaltung zum Bis(2-hydroxyethyl)terephthalat und dessen Polykondensation unter Freisetzen von Ethylenglykol oder
2. durch direkte Polykondensation von Ethylenglykol u. Terephthalsäure:
   Methode 1: 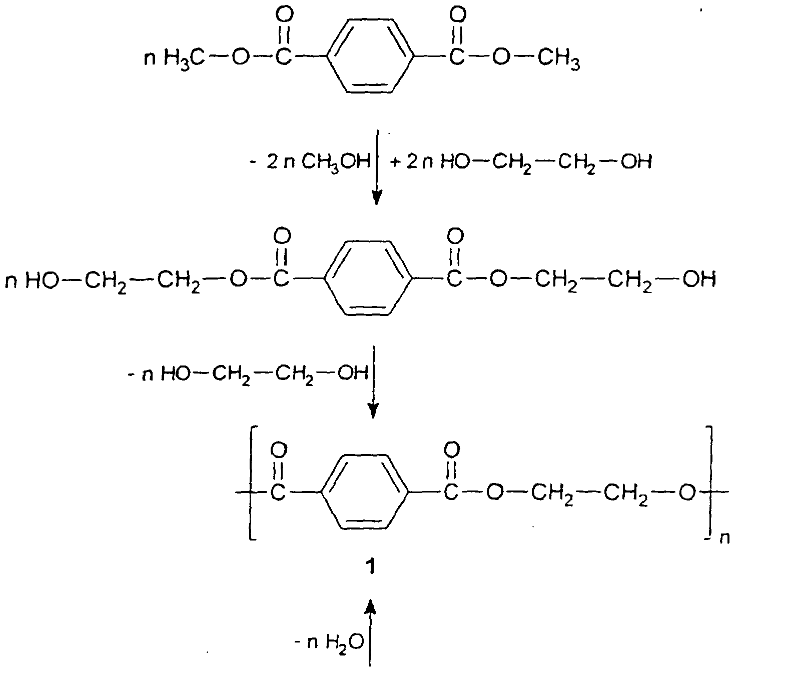
   Methode 2:

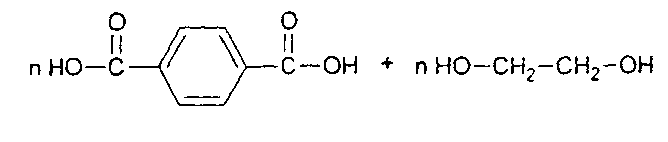

Nachdem heute Terephthalsäure in hochreiner Form zugänglich ist, gewinnt die 2. Methode zunehmend an Bedeutung (Vorteile: geringerer Materialverbrauch, höhere Reaktionsgeschwindigkeit, Methanol-Aufbereitung und Umesterungskatalysatoren nicht erforderlich). Die Polyethylenterephthalat-Herstellung erfolgt technisch in kontinuierlichen und diskontinuierlichen Prozessen.

Polyethylenterephthalate (Dichte ca. 1,38g/cm3, Schmelzpunkt ca. 260°C) sind teilkristalline Produkte mit hoher Festigkeit, Steifheit und Maßbeständigkeit, guten Gleit- und Verschleiß-Eigenschaften sowie hoher Chemikalien-Beständigkeit. Durch Einbau fremder Bausteine (Isophthalsäure und/oder 1,4-Cyclohexandimethanol) wird der Kristallinitätsgrad (30 bis 40%) erniedrigt. Die resultierenden Copolyester besitzen hohe Transparenz, Zähigkeit, Maßbeständigkeit sowie günstige Zeitstand-, Gleit-, Verschleiß- und Spannungsriß-Eigenschaften.

Zur Anpassung an die für die einzelnen Anwendungsgebiete gestellten Anforderungen an die Polyethylenterephthalate werden die Polyethylenterephthalate auch in modifizierter Form, zum Beispiel als Blends mit Polycarbonaten oder Polybutylenterephthalaten eingesetzt.

Gerade in der Druckindustrie ist es von Bedeutung, wenn die hier eingesetzten Klebebänder eine hohe Flexibilität aufweisen, also in gewissem Maße bei Druckanwendung ihre Dicke verändern können beziehungsweise nach Wegnahme der Belastung wieder ihre ursprüngliche Form annehmen können.
Aus diesem Grunde ist in einer weiteren vorteilhaften Ausführungsform des beidseitig klebend ausgerüsteten Klebebands zwischen der Folie aus Polyethylenterephthalat (PET) und zumindest einer Klebemasse ein geschäumter Träger vorhanden, insbesondere zwischen der dem Druckzylinder oder dem Sleeve zugewandten Klebemasse und der Folie aus Polyethylenterephthalat (PET), sofern das Klebeband in der Druckindustrie Verwendung findet.
Vorteilhaft ist darüber hinaus, wenn der geschäumte Träger aus Polyurethan, PVC oder Polyolefin(en) besteht.
Weiter bevorzugt ist, wenn die Oberflächen des geschäumten Trägers physikalisch vorbehandelt sind, insbesondere corona-vorbehandelt.

Weiter vorzugsweise hat die Folie aus Polyethylenterephthalat (PET) eine Dicke von 5 µm bis 500 µm, bevorzugt 5 µm bis 60 µm, ganz besonders bevorzugt 23 µm.

Ein weiterer Vorteil ist die hervorragende und dauerhafte ein- oder beidseitige Bedruckbarkeit der geätzten, vorbehandelten Folie aus Polyethylenterephthalat (PET), die ohne eine weitere, sonst übliche physikalische Vorbehandlung auskommt.
Diese Bedruckung kann unter einer später aufzubringenden Haftklebemasse erfolgen: Nicht mehr notwendig sind nunmehr anschließende aggressive Vorbehandlungsmethoden zur Verbesserung der Klebmasseverankerung, insbesondere chemisches Primern, die die Farbe angreifen.
In einer weiteren vorteilhaften Ausführungsform der Erfindung ist daher die Folie aus Polyethylenterephthalat (PET) ein- oder beidseitig bedruckt.

Weiter bevorzugt ist, wenn die Oberflächen der Folie aus Polyethylenterephthalat (PET) physikalisch vorbehandelt sind, insbesondere corona-vorbehandelt.

Um sehr gute Ergebnisse für die Aufrauhung zu erzielen, ist es zu empfehlen, als Reagenz Trichloressigsäure (Cl3C-COOH) oder Trichloressigsäure in Kombination mit inerten kristallinen Verbindungen, bevorzugt Siliziumverbindungen, besonders bevorzugt [SiO₂]ₓ, einzusetzen.
Sinn der inerten kristallinen Verbindungen ist, in die Oberfläche der PET-Folie eingebaut zu werden, um auf diese Weise die Rauhigkeit und die Oberflächenenergie zu verstärken.

Um die gewünschten Eigenschaften des Klebebandes, insbesondere die nötige Kohäsion sowie die geforderte Reversibilität nach Beendigung des Druckvorganges, gezielt einzustellen, ist der Zusatz von Klebharzen und Füllstoffen wie unter anderem Kohlenwasserstoffharzen, Weichmachern, Alterungsschutzmitteln oder Kreide zu den Klebmassen möglich.

Weiterhin kann das Klebeband ein- oder beidseitig mit einer Abdeckung aus Papier oder aus einer entsprechenden Folie, insbesondere einer beidseitig silikonisierten, versehen sein, um ein längeres Lagern und eine bequeme Handhabung während des Gebrauchs zu gewährleisten.

Aufgrund seiner speziellen Eigenschaften läßt sich das beidseitig klebend ausgerüstete Klebeband hervorragend zur Fixierung von Druckplatten, insbesondere von mehrschichtigen Photopolymer-Druckplatten auf Druckzylindern oder Sleeves einsetzen.

Gerade in diesem Fall hat es sich als vorteilhaft erwiesen, wenn zur Beschichtung der beiden Außenflächen des Trägers zwei unterschiedliche Klebmassen verwendet werden.

Auf die Seite des Klebebandes, die an der Trägerschicht der Druckplatte angesetzt wird, wird dann eine schwach klebende Acrylat-Klebmasse beschichtet. Die Klebmasse weist insbesondere eine Klebkraft von 0,5 bis 5 N/cm, bevorzugt 2,5 N/cm, auf.

Die andere Klebebeschichtung wird dann von einer stärker klebenden Schicht gebildet, die vorzugsweise ebenfalls auf Acrylat basiert. Diese Beschichtung ist insbesondere durch eine Klebkraft von 1 bis 6 N/cm, bevorzugt 4,5 N/cm, gekennzeichnet. Die angegebenen Klebkräfte sind nach AFERA 4001 gemessen.

Die gewünschten Klebkräfte der jeweiligen Schicht sind durch Art und Menge der verwendeten Harze sowie der eingesetzten Füllstoffe variierbar.

Das Klebeband ist aufgrund seiner besonderen Ausführung besonders mit den auf die Druckplatte abgestimmten Klebkräften hervorragend geeignet, die Druckplatten auf den Druckzylindern zu verkleben. Einerseits ist es möglich, die Druckplatten beliebig oft vor Druckbeginn zu repositionieren, andererseits aber ist eine feste Verklebung der Platte während des Druckvorganges gewährleistet. Nach dem Drucken schließlich kann die Druckplatte ohne irgendeine Beschädigung vom Klebeband rückstandsfrei abgenommen werden, wobei das Klebeband zunächst auf dem Druckzylinder verbleibt. Ein Abschälen der Trägerschicht der Platte oder die Bildung von unerwünschten Falten in der Platte während des Entfemens treten nicht auf. Darüber hinaus kann das Klebeband von dem Druckzylinder abgezogen werden, ohne daß ein Rückstand der Klebebeschichtung auf dieser verbleibt

Im folgenden werden die Vorteile des Klebebands in mehreren Versuchen beispielhaft gegenüber zwei herkömmlichen Klebebändern gezeigt.

Unter Verwendung einer Acrylat-, Naturkautschuk-, Synthesekautschuk- oder Polyurethan-Haftklebemasse, insbesondere Acrylat-Haftklebernasse, wurden Vergleichsmessungen mit verschieden vorbehandelten PET-Folien durchgeführt.

Hierbei ergaben sich die höchsten Masseverankerungswerte eindeutig für die geätzte Folie und besonders für die geätzte Folie mit zusätzlicher Coronavorbehandlung.

| | Vergleichsversuch 1 | Vergleichsversuch 2 | Versuch 1 | Versuch 2 |
|---|---|---|---|---|
| Vorbehandlungsart | Corona | Corona und Vorstrich | Geätzte Folie | geätzte Folie und Corona |
| Masseverankerung Kraft [N/cm] | 4,0 | 4,5 | 5,2 | 6,8 |

Zur Messung der Masseverankerungswerte wurden die Folien mit einer Acrylat-Klebmasse direkt aus Lösung beschichtet und bei 100 °C 30min getrocknet. Die so entstandenen Muster wurden mit der unbeschichteten Seite auf eine feste Unterlage mit Hilfe eines handelsüblichen doppelseitigen Klebebandes fixiert. Auf die offen liegende Klebemasse des so entstandenen Verbundes wurden 20 mm breite Streifen der geätzten Folie laminiert.
Anrollen und Abziehen dieser Streifen erfolgte nach AFERA 4001. Die hierbei gemessene Kraft ist ein Maß für die Masseverankerung, da die Klebemasse während der Messung von dem ursprünglich direkt beschichtetem Träger auf die Teststreifen umspulte.

Durch den Wegfall des Vorstriches, der üblicherweise in äußerst niedrigen Schichtdicken mit relativ hohen Toleranzen aufgetragen wird, kommt es zusätzlich zu einer gleichmäßigeren Vorbehandlung der Folie.

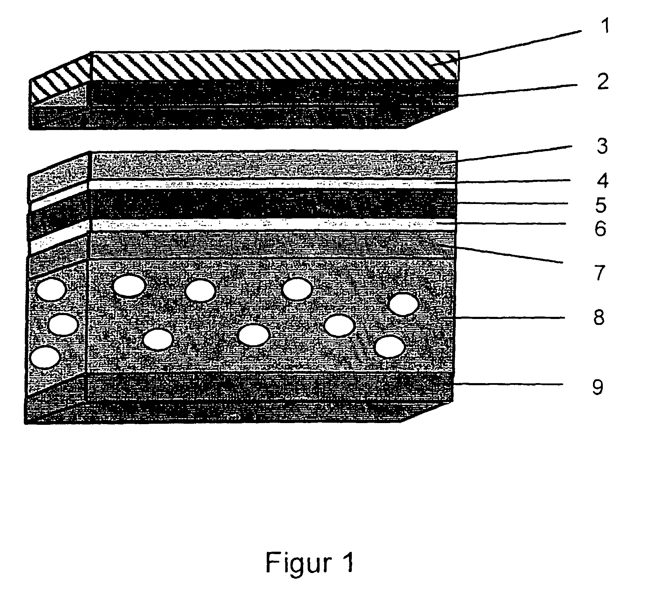

In der Figur 1 ist das erfindungsgemäße Klebeband in einer besonders vorteilhaften Ausführungsform und Verwendung gezeigt, ohne damit die Erfindung unnötig einschränken zu wollen.

Das Klebeband dient zum Verkleben eines Klischees, das sich aus einer PET-Folie 2 und einer Schicht eines Fotopolymers 1 zusammensetzt.
Die Schichten 3 bis 9 bilden ein doppelseitig klebend ausgerüstetes Klischeeklebeband, das dank seines geschäumten Trägers 8 kompressibel ist.
Beginnend von der Seite, mittels derer das Klischee verklebt wird, besteht das Klebeband aus folgenden einzelnen Abschnitten:
3 Haftklebemasse zur Verankerung des Klischees
4 Die mittels des Einsatzes von Trichloressigsäure geätzte, aufgerauhte obere Oberfläche der Folie aus Polyethylenterephthalat (PET) 5
5 Folie aus Polyethylenterephthalat (PET)
6 Die mittels des Einsatzes von Trichloressigsäure geätzte, aufgerauhte untere Oberfläche der Folie aus Polyethylenterephthalat (PET) 5
7 Haftklebemasse zur Verankerung des geschäumten Trägers 8 auf der Folie aus Polyethylenterephthalat (PET) 5
8 geschäumter Träger
9 Haftklebemasse zur Verankerung auf dem Druckzylinder

## Patentansprüche (Patentansprüche für folgende(n) Vertragsstaat(en): DE, GB, FR)

1. Verwendung eines beidseitig klebend ausgerüsteten Klebebands zur Fixierung von Druckplatten, wobei der Träger des Klebebandes eine Folie aus Polyethylenterephthalat (PET) ist und auf der Folie beidseitig selbstklebende Beschichtungen aufgebracht sind,
die Oberfläche der Folie aus Polyethylenterephthalat (PET) ein- oder beidseitig zumindest partiell unter Verwendung einer Reagenz, die einen Ätzprozess bewirkt, aufgeraut ist und/oder die Oberflächenenergie der Oberfläche der Folie erhöht ist,
**dadurch gekennzeichnet, dass**
die Oberfläche der Folie aus Polyethylenterephthalat (PET) zusätzlich ein- oder beidseitig nach dem Corona-, Plasma- oder Flammverfahren physikalisch vorbehandelt ist.

2. Verwendung gemäß Anspruch 1, **dadurch gekennzeichnet, dass** zwischen der Folie aus Polyethylenterephthalat (PET) und zumindest einer Klebemasse ein geschäumter Träger vorhanden ist.

3. Verwendung gemäß den Ansprüchen 1 und/oder 2, **dadurch gekennzeichnet, dass** der geschäumte Träger zwischen der dem Druckzylinder oder dem Sleeve zugewandten Klebemasse und der Folie aus Polyethylenterepilthalat (PET) vorhanden ist.

4. Verwendung gemäß den Ansprüchen 1 bis 3, **dadurch gekennzeichnet, dass** die Folie aus Polyethylenterephthalat (PET) eine Dicke von 5 *µ*m bis 500 *µ*m aufweist.

5. Verwendung gemäß zumindest einem der vorherigen Ansprüche, **dadurch gekennzeichnet, dass** die Folie aus Polyethylenterephthalat (PET) ein- oder beidseitig bedruckt ist.

6. Verwendung gemäß zumindest einem der Ansprüche 2 bis 5, **dadurch gekennzeichnet, dass** der geschäumte Träger aus Polyurethan. PVC oder Polyolefin(en) besteht.

7. Verwendung gemäß zumindest einem der vorherigen Ansprüche, **dadurch gekennzeichnet, dass** als Reagenz Trichloressigsäure oder Trichloressigsäure in Kombination mit inerten kristallinen Verbindungen zum Einsatz kommt.

8. Verwendung gemäß Anspruch 7, **dadurch gekennzeichnet, dass** die inerten kristallinen Verbindungen Siliziumverbindungen sind.

9. Verwendung gemäß Anspruch 8, **dadurch gekennzeichnet, dass** als Siliziumverbindungen [SiO₂]ₓ zum Einsatz kommt

10. Verwendung gemäß zumindest einem der vorherigen Ansprüche zur Fixierung von mehrschichtigen Photopolymer-Druckplatten auf Druckzylindern oder Sleeves.

## Patentansprüche (Patentansprüche für folgende(n) Vertragsstaat(en): IT und ES)

1. Verwendung eines beidseitig klebend ausgerüsteten Klebebands zur Fixierung von Druckplatten, wobei der Träger des Klebebandes eine Folie aus Polyethylenterephthalat (PET) ist und auf der Folie beidseitig selbstklebende Beschichtungen aufgebracht sind,
**dadurch gekennzeichnet, dass**
die Oberfläche der Folie aus Polyethylenterephthalat (PET) ein- oder beidseitig zumindest partiell unter Verwendung einer Reagenz, die einen Ätzprozess bewirkt, aufgeraut ist und/oder die Oberflächenenergie der Oberfläche der Folie erhöht ist.

2. Verwendung gemäß Anspruch 1, **dadurch gekennzeichnet, dass** zwischen der Folie aus Polyethylenterephthalat (PET) und zumindest einer Klebemasse ein geschäumter Träger vorhanden ist.

3. Verwendung gemäß den Ansprüchen 1 und/oder 2, **dadurch gekennzeichnet, dass** der geschäumte Träger zwischen der dem Druckzylinder oder dem Sleeve zugewandten Klebemasse und der Folie aus Polyethylenterephthalat (PET) vorhanden ist.

4. Verwendung gemäß den Ansprüchen 1 bis 3. **dadurch gekennzeichnet, dass** die Folie aus Polyethylenterephthalat (PET) eine Dicke von 5 *µ*m bis 500 *µ*m aufweist.

5. Verwendung gemäß zumindest einem der vorherigen Ansprüche, **dadurch gekennzeichnet, dass** die Folie aus Polyethylenterephthalat (PET) ein- oder beidseitig bedruckt ist.

6. Verwendung gemäß zumindest einem der Ansprüche 2 bis 5, **dadurch gekennzeichnet, dass** der geschäumte Träger aus Polyurethan, PVC oder Polyolefin(en) besteht.

7. Verwendung gemäß zumindest einem der vorherigen Ansprüche, **dadurch gekennzeichnet, dass** als Reagenz Trichloressigsäure oder Trichloressigsäure in Kombination mit inerten kristallinen Verbindungen zum Einsatz kommt.

8. Verwendung gemäß Anspruch 7, **dadurch gekennzeichnet, dass** die inerten kristallinen Verbindungen Siliziumverbindungen sind.

9. Verwendung gemäß Anspruch 8. **dadurch gekennzeichnet, dass** als Siliziumverbindungen [SiO₂]ₓ zum Einsatz kommt.

10. Verwendung gemäß zumindest einem der vorherigen Ansprüche, **dadurch gekennzeichnet, dass** die Folie aus Polyethylenterephthalat (PET) zusätzlich ein- oder beidseitig physikalisch vorbehandelt ist.

11. Verwendung gemäß Anspruch 10, **dadurch gekennzeichnet, dass** nach dem Corona-, Plasma oder Flammverfahren physikalisch vorbehandelt ist.

12. Verwendung gemäß zumindest einem der vorherigen Ansprüche zur Fixierung von mehrschichtigen Photopolymer-Druckplatten auf Druckzylindern oder Sleeves.

## Claims (Claims for the following Contracting State(s): DE, GB, FR)

1. Use of a double sided adhesive tape for mounting printing plates, the carrier of the adhesive tape being a polyethylene terephthalate (PET) film and self-adhesive coatings being applied to both sides of the film,
the surface of the polyethylene terephthalate (PET) film being at least partly roughened on one or both sides using a reagent which brings about an etching process and/or the surface energy of the surface of the film being increased,
**characterized in that** the surface of the polyethylene terephthalate (PET) film has been additionally physically pretreated on one or both sides by the corona, plasma or flame process.

2. Use according to Claim 1, **characterized in that** between the polyethylene terephthalate (PET) film and at least one adhesive there is a foamed carrier.

3. Use according to either of Claims 1 and/or 2, **characterized in that** the foamed carrier is between the adhesive facing the printing cylinder or sleeve and the polyethylene terephthalate (PET) film.

4. Use according to any of Claims 1 to 3, **characterized in that** the polyethylene terephthalate (PET) film has a thickness of from 5 µm to 500 µm.

5. Use according to at least one of the preceding claims, **characterized in that** the polyethylene terephthalate (PET) film has been printed on one or both sides.

6. Use according to at least one of Claims 2 to 5, **characterized in that** the foamed carrier is composed of polyurethane, PVC or polyolefin(s).

7. Use according to at least one of the preceding claims, **characterized in that** trichloroacetic acid alone or in combination with inert crystalline compounds is employed as reagent.

8. Use according to Claim 7, **characterized in that** the inert crystalline compounds are silicon compounds.

9. Use according to Claim 8, **characterized in that** [SiO₂]ₓ are employed as silicon compounds.

10. Use according to at least one of the preceding claims for mounting multilayer photopolymer printing plates to printing cylinders or sleeves.

## Claims (Claims for the following Contracting State(s): IT and ES)

1. Use of a double sided adhesive tape for mounting printing plates, the carrier of the adhesive tape being a polyethylene terephthalate (PET) film and self-adhesive coatings being applied to both sides of the film,
**characterized in that** the surface of the polyethylene terephthalate (PET) film is at least partly roughened on one or both sides using a reagent which brings about an etching process and/or the surface energy of the surface of the film is increased.

2. Use according to Claim 1, **characterized in that** between the polyethylene terephthalate (PET) film and at least one adhesive there is a foamed carrier.

3. Use according to either of Claims 1 and/or 2,
**characterized in that** the foamed carrier is between the adhesive facing the printing cylinder or sleeve and the polyethylene terephthalate (PET) film.

4. Use according to any of Claims 1 to 3, **characterized in that** the polyethylene terephthalate (PET) film has a thickness of from 5 µm to 500 µm.

5. Use according to at least one of the preceding claims, **characterized in that** the polyethylene terephthalate (PET) film has been printed on one or both sides.

6. Use according to at least one of Claims 2 to 5,
**characterized in that** the foamed carrier is composed of polyurethane, PVC or polyolefin(s).

7. Use according to at least one of the preceding claims, **characterized in that** trichloroacetic acid alone or in combination with inert crystalline compounds is employed as reagent.

8. Use according to Claim 7, **characterized in that** the inert crystalline compounds are silicon compounds.

9. Use according to Claim 8, **characterized in that** [SiO₂]ₓ are employed as silicon compounds.

10. Use according to at least one of the preceding claims, **characterized in that** the polyethylene terephthalate (PET) film has been additionally physically pretreated on one or both sides.

11. Use according to Claim 10, **characterized in that** the physical pretreatment is carried out by the corona, plasma or flame process.

12. Use according to at least one of the preceding claims for mounting multilayer photopolymer printing plates to printing cylinders or sleeves.

## Revendications (Revendications pour l'(les) Etat(s) contractant(s) suivant(s): DE, GB, FR)

1. Utilisation d'un ruban adhésif double face pour la fixation de plaques d'impression, où le support du ruban adhésif est une feuille de polyéthylène téréphtalate (PET) et des revêtements autoadhésifs sont appliqués sur les deux faces de la feuille, la surface de la feuille de polyéthylène téréphtalate (PET) est au moins partiellement rendue rugueuse sur une ou sur les deux faces par l'utilisation d'un réactif qui provoque un processus de mordançage, et/ou l'énergie de surface de la feuille est augmentée, **caractérisée en ce que** la surface de la feuille de polyéthylène téréphtalate (PET) est en outre physiquement prétraitée, sur une ou sur les deux faces, par le procédé corona, à plasma ou à la flamme .

2. Utilisation selon la revendication 1, **caractérisée en ce que**, entre la feuille de polyéthylène téréphtalate (PET) et au moins une masse adhésive, se trouve un support mousse.

3. Utilisation selon la revendication 1 et/ou 2, **caractérisée en ce que** le support mousse se trouve entre la masse adhésive du côté du cylindre d'impression ou du manchon et la feuille de polyéthylène téréphtalate (PET).

4. Utilisation selon les revendications 1 à 3, **caractérisée en ce que** la feuille de polyéthylène téréphtalate (PET) présente une épaisseur de 5 µm à 500 µm.

5. Utilisation selon au moins l'une quelconque des revendications qui précèdent, **caractérisée en ce que** la feuille de polyéthylène téréphtalate (PET) est imprimée sur une ou sur les deux faces.

6. Utilisation selon au moins l'une quelconque des revendications 2 à 5, **caractérisée en ce que** le support mousse consiste en polyuréthanne, en PVC ou en polyoléfine(s).

7. Utilisation selon au moins l'une quelconque des revendications qui précèdent, **caractérisée en ce que** l'on utilise comme réactif de l'acide trichloracétique ou de l'acide trichloracétique en combinaison avec des composés cristallins inertes.

8. Utilisation selon la revendication 7, **caractérisée en ce que** les composés cristallins inertes sont des composés de silicium.

9. Utilisation selon la revendication 8, **caractérisée en ce que** l'on utilise du [SiO₂]ₓ en tant que composé de silicium.

10. Utilisation selon au moins l'une quelconque des revendications qui précèdent pour la fixation de plaques d'impression photopolymères multicouches sur des cylindres d'impression ou des manchons.

## Revendications (Revendications pour l'(les) Etat(s) contractant(s) suivant(s): IT et ES)

1. Utilisation d'un ruban adhésif double face pour la fixation de plaques d'impression, où le support du ruban adhésif est une feuille de polyéthylène téréphtalate (PET) et des revêtements autoadhésifs sont appliqués sur les deux faces de la feuille, **caractérisée en ce que** la surface de la feuille de polyéthylène téréphtalate (PET) est au moins partiellement rendue rugueuse sur une ou sur les deux faces par l'utilisation d'un réactif qui provoque un processus de mordançage, et/ou l'énergie de surface de la feuille est augmentée.

2. Utilisation selon la revendication 1, **caractérisée en ce que**, entre la feuille de polyéthylène téréphtalate (PET) et au moins une masse adhésive, se trouve un support mousse.

3. Utilisation selon la revendication 1 et/ou 2, **caractérisée en ce que** le support mousse se trouve entre la masse adhésive du côté du cylindre d'impression ou du manchon et la feuille de polyéthylène téréphtalate (PET).

4. Utilisation selon les revendications 1 à 3, **caractérisée en ce que** la feuille de polyéthylène téréphtalate (PET) présente une épaisseur de 5 µm à 500 µm.

5. Utilisation selon au moins l'une quelconque des revendications qui précèdent, **caractérisée en ce que** la feuille de polyéthylène téréphtalate (PET) est imprimée sur une ou sur les deux faces.

6. Utilisation selon au moins l'une quelconque des revendications 2 à 5, **caractérisée en ce que** le support mousse consiste en polyuréthanne, en PVC ou en polyoléfine(s).

7. Utilisation selon au moins l'une quelconque des revendications qui précèdent, **caractérisée en ce que** l'on utilise comme réactif de l'acide trichloracétique ou de l'acide trichloracétique en combinaison avec des composés cristallins inertes.

8. Utilisation selon la revendication 7, **caractérisée en ce que** les composés cristallins inertes sont des composés de silicium.

9. Utilisation selon la revendication 8, **caractérisée en ce que** l'on utilise du [SiO₂]ₓ en tant que composé de silicium.

10. Utilisation selon au moins l'une quelconque des revendications précédentes, **caractérisée en ce que** la feuille de polyéthylène téréphtalate (PET) est en autre physiquement prétraitée sur une ou sur les deux faces.

11. Utilisation selon la revendication 10, **caractérisée en ce que** le prétraitement physique s'effectue par le procédé corona, à plasma ou à la flamme.

12. Utilisation selon au moins l'une quelconque des revendications qui précèdent pour la fixation de plaques d'impression photopolymères multicouches sur des cylindres d'impression ou des manchons.
